# EUROPÄISCHE PATENTSCHRIFT

(11) **EP 2 718 342 B1**
(45) Veröffentlichungstag und Bekanntmachung des Hinweises auf die Patenterteilung: **03.08.2016**
(21) Anmeldenummer: 12721238.9
(22) Anmeldetag: 07.05.2012
(51) Int. Cl.: C08G 18/28, C08G 18/62, C08G 18/79, C08G 18/80, C09D 175/04

(54) **BESCHICHTUNGSMITTELZUSAMMENSETZUNGEN UND DARAUS HERGESTELLTE BESCHICHTUNGEN MIT HOHER KRATZFESTIGKEIT BEI GLEICHZEITIG GUTER POLIERBARKEIT SOWIE DEREN VERWENDUNG**
COATING AGENT COMPOSITIONS, COATINGS MADE THEREFROM AND EXHIBITING HIGH SCRATCH RESISTANCE AND GOOD POLISHABILITY, AND USE THEREOF
COMPOSITIONS D'AGENT DE REVÊTEMENT ET REVÊTEMENTS PRODUITS À PARTIR DE CELLES-CI AYANT UNE RÉSISTANCE AUX RAYURES ÉLEVÉE AVEC SIMULTANÉMENT UNE BONNE APTITUDE AU POLISSAGE, ET UTILISATION DESDITES COMPOSITIONS

(30) Priorität: 09.06.2011 US 201161494913 P; 09.06.2011 EP 11169288
(43) Veröffentlichungstag der Anmeldung: 16.04.2014
(73) Patentinhaber: BASF Coatings GmbH, 48165 Münster (DE)
(72) Erfinder: GROENEWOLT, Matthijs, 48147 Münster (DE); WIGGER, Georg, 48308 Senden (DE); KÜHS, Tilo, 48268 Greven (DE); KEPLER, Thomas, 48165 Münster (DE)
(74) Vertreter: Leifert & Steffan
(86) Internationale Anmeldenummer: PCT/EP2012/058355
(87) Internationale Veröffentlichungsnummer: WO 2012/168014

(56) Entgegenhaltungen:
- WO-A1-2007/033786
- WO-A1-2008/074490
- WO-A1-2011/131463
- DE-A1-102008 030 304

## Beschreibung

Die vorliegende Erfindung betrifft nichtwässrige Beschichtungsmittelzusammensetzungen enthaltend mindestens eine Polyhydroxylgruppen-haltige Verbindung, mindestens Polyisocyanat mit freien oder blockierten Isocyanatgruppen und mit Silangruppen und/oder dessen Dimer und/oder Oligomer und mindestens einen Katalysator (D) für die Vernetzung der Silangruppen.

Derartige Beschichtungsmittel sind beispielsweise aus der WO 08/74491, WO 08/74490, der WO 08/74489, der WO09/077181 und der WO 10/149236 bekannt. Die in diesen Beschichtungsmitteln eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf. Verbesserungsbedürftig bei diesen Beschichtungsmitteln ist jedoch die Schleifbarkeit und Polierbarkeit der resultierenden Beschichtungen.

Ferner sind in der EP-A-1 273 640 2K-Beschichtungsmittel beschrieben, enthaltend eine Polyol-Komponente und eine Vernetzerkomponente, bestehend aus aliphatischen und/oder cycloaliphatischen Polyisocyanaten oder den davon durch Polymerisierung, Allophanat-, Biuret- oder Urethanbildung abgeleiteten Polyisocyanaten, wobei 0,1 bis 95 mol-% der ursprünglich freien vorhandenen Isocyanatgruppen mit Bisalkoxysilylamin umgesetzt sind. Diese Beschichtungsmittel können zur Herstellung von Klar- oder Decklackierungen im Kraftfahrzeugbereich eingesetzt werden und weisen nach ihrer vollständigen Härtung eine gute Kratzbeständigkeit bei gleichzeitig guter Beständigkeit gegen Umwelteinflüsse auf. Jedoch sind in dieser Schrift keine Angaben enthalten, wie die Schleifbarkeit und Polierbarkeit der resultierenden Beschichtungen verbessert werden kann.

Aus der WO07/033786 sind außerdem Beschichtungsmittel bekannt, die neben Phosphonsäurediestern und Diphosphonsäurediestern als Katalysator (A) silangruppenhaltige Gemische (B), wie beispielsweise die Mischung aus dem isocyanatgruppenfreien Umsetzungsprodukt (B1) von Hexamethylendiisocyanat-Isocyanurat mit N,N-Bis(3-trimethoxysilylpropan-1-yl)amin und dem isocyanatgruppenfreien Umsetzungsprodukt (B2) von IsophorondiisocyanatIsocyanurat mit N-(3-Trimethoxysilylpropan-1-yl)-N-n-butylamin, sowie ggf. als weitere Zusatzstoffe (C) Polyacrylatharze oder andere Bindemittel und Vernetzungsmittel enthalten. Die aus diesen Beschichtungsmitteln hergestellten Beschichtungen weisen nach ihrer Härte wiederum eine gute Kratzbeständigkeit bei gleichzeitig guter Beständigkeit gegen Chemikalien und Umwelteinflüsse auf, jedoch ist die Witterungsbeständigkeit verbesserungsbedürftig und die resultierenden Beschichtungen sind recht spröde. Außerdem fehlen auch hier wiederum Angaben, wie die Schleifbarkeit und Polierbarkeit der resultierenden Beschichtungen verbessert werden kann.

In der WO 2001/98393 werden 2 K-Beschichtungsmittel beschrieben, enthaltend ein Polyol als Bindemittelkomponente sowie als Vernetzerkomponente eine Mischung aus einem Polyisocyanat (A) und einem Silan-Oligomer (B), welches mindestens zwei Isocyanatgruppen und zusätzlich Alkoxysilangruppen, bevorzugt Bisalkoxysilangruppen, enthält und welches hergestellt wird durch Umsetzung eines Polyisocyanates (PI) mit Alkoxysilylaminen, bevorzugt mit Bisalkoxysilylaminen, insbesondere mit Bis(3-propyltrimethoxysilyl)amin. Als Polyisocyanat (A) sowie als Polyisocyanat (PI) zur Herstellung der Komponente (B) werden bevorzugt Hexamethylendiisocyanat und Isophorondiisocyanat sowie deren Biurete und Isocyanurate eingesetzt. Diese Beschichtungsmittel werden insbesondere als Primer eingesetzt und auf die Haftung auf metallischen Untergründen, bevorzugt auf Aluminium-Untergründen, optimiert. Angaben, wie die Kratzfestigkeit einerseits und gleichzeitig aber auch die Schleif- und Polierbarkeit der resultierenden Beschichtungen verbessert werden kann, sind aber in dieser Schrift nicht enthalten.

Weiterhin ist es aus der US 2006-0217472 A1 bekannt, dass die Kratzfestigkeit von Beschichtungen auf Basis von Polyurethanen verbessert werden kann, wenn man zu Beschichtungsmitteln, die ein hydroxylgruppenhaltiges Bindemittel, einen isocyanatgruppenhaltigen Vernetzer und einen Metallkatalysator für die OH/NCO-Reaktion enthalten, ein Aminosilan, wie z.B. Bis(3-propyltrimethoxysilyl)amin, oder dessen Umsetzungsprodukte mit Isocyanaten zusetzt.

Aus der WO 07/037857 sind schließlich Beschichtungsmittel bekannt, die neben Polyhydroxylgruppen-haltigen Verbindungen und Polyisocyanatgruppen-haltigen Verbindungen 1 bis 10 Gew.-% eines silylierten Dimerfettsäurealkohols enthalten, der durch Umsetzung von Dimerfettsäurealkohol mit isocyanatfunktionellen Silanen erhalten wird. Die unter Verwendung dieser Beschichtungsmittel erhaltenen Beschichtungen zeichnen sich insbesondere durch einen sehr hohen Glanz aus. Mit zunehmendem Anteil der Beschichtungsmittel an den silylierten Dimerfettsäurealkoholen nimmt die Härte und die Beständigkeit gegenüber Lösemittel, gemessen in Doppelhüben Methylethylketon, der resultierenden Beschichtungen ab. Im Bereich der Automobillackierung werden jedoch zunehmend Beschichtungen mit einer verbesserten Härte und Beständigkeit und somit einer verbesserten Kratzfestigkeit gefordert.

### Aufgabe

Aufgabe der vorliegenden Erfindung war es daher, Beschichtungsmittelzusammensetzungen, insbesondere für die Automobilserienlackierung und die Automobilreparaturlackierung, zur Verfügung zu stellen, die zu Beschichtungen führen, die hochgradig kratzfest sind und insbesondere einen hohen Glanzerhalt nach Kratzbelastung aufweisen. Gleichzeitig sollten die resultierenden Beschichtungen aber auch eine gute Schleifbarkeit und gute Polierbarkeit gewährleisten.

Ferner sollten Beschichtungsmittelzusammensetzungen zur Verfügung gestellt werden, die zu einem hochgradig witterungsstabilen Netzwerk führen und die gleichzeitig eine hohe Säurefestigkeit gewährleisten. Weiterhin sollten sich die Beschichtungen und Lackierungen, speziell die Klarlackierungen, auch in Schichtdicken > 40 µm herstellen lassen, ohne dass Spannungsrisse auftreten. Darüber hinaus sollten die Beschichtungsmittel die üblicherweise an die Klarlackschicht bei Automobilserienlackierungen und Autoreparaturlackierungen gestellten Anforderungen erfüllen.

Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend
(A) mindestens eine Polyhydroxylgruppen-haltige Verbindung (A),
(B) mindestens eine Polyisocyanatgruppenhaltige Verbindung (B) mit freien oder blockierten Isocyanatgruppen
   und
(C) mindestens einen Katalysator (D) für die Vernetzung von Silangruppen, wobei die Komponente (B) mindestens eine Struktureinheit der Formel (I)

   -NR-(X-SiR"x(OR')3-x) (I),

   und mindestens eine Struktureinheit der Formel (II)

   -N(X-SiR"x(OR')3-x)n(X'-SiR"y(OR')3-y)m (II),

   mit
   R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
   R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
   X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
   R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
   n = 0 bis 2, m = 0 bis 2, m+n = 2 sowie x, y = 0 bis 2 ist,
enthält, mit der Maßgabe, dass
(i) in der Komponente (B) mehr als 30 mol-% und weniger als 70 mol-% der ursprünglich vorhandenen Isocyanatgruppen zu Struktureinheiten (I) plus (II) umgesetzt worden sind,
(ii) in der Komponente (B) mehr als 25 und weniger als 36 mol-% der ursprünglich vorhandenen Isocyanatgruppen zu Struktureinheiten (II) umgesetzt worden sind
   und
(iii) die Beschichtungsmittelzusammensetzung als Komponente (B) mindestens eine Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper enthält, ausgenommen eine Beschichtungsmittelzusammensetzung gemäß Beispiel B4 der WO 2011/131463 A1.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es ist überraschend und war nicht vorhersehbar, dass die Beschichtungsmittelzusammensetzungen zu Beschichtungen führen, die hochgradig kratzfest sind und insbesondere einen hohen Glanzerhalt nach Kratzbelastung aufweisen, dabei gleichzeitig aber auch eine gute Schleifbarkeit und gute Polierbarkeit der resultierenden Beschichtungen gewährleisten.

Ferner führen die Beschichtungsmittelzusammensetzungen zu einem hochgradig witterungsstabilen Netzwerk und gewährleisten gleichzeitig eine hohe Säurefestigkeit der Beschichtungen. Weiterhin lassen sich die Beschichtungen und Lackierungen, speziell die Klarlackierungen, auch in Schichtdicken > 40 µm herstellen, ohne dass Spannungsrisse auftreten. Darüber hinaus erfüllen die Beschichtungsmittel die üblicherweise an die Klarlackschicht bei Automobilserienlackierungen und Autoreparaturlackierungen gestellten Anforderungen.

Schließlich sind die neuen Beschichtungsmittel einfach und sehr gut reproduzierbar herstellbar und bereiten während der Lackapplikation keine ökologischen Probleme.

### Beschreibung der Erfindung

### Die erfindungsgemäßen Beschichtungsmittel

Insbesondere handelt es sich bei den erfindungsgemäßen Beschichtungsmitteln um thermisch härtbare Beschichtungsmittel, also bevorzugt um Beschichtungsmittel, die im wesentlichen frei sind von strahlenhärtbaren ungesättigten Verbindungen, insbesondere völlig frei sind von strahlenhärtbaren ungesättigten Verbindungen.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert

(DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in
EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen - 100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acrylund/oder Methacrylsäure eingesetzt werden.

### Hydroxylgruppenhaltige Verbindungen (C)

Die erfindungsgemäßen Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Polyisocyanatgruppenhaltige Komponente (B)

### Die acyclische, aliphatische Polyisocyanat-Komponente (B2)

Es ist erfindungswesentlich, dass die Beschichtungsmittelzusammensetzung als Komponente (B) mindestens eine Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper enthält.

Bevorzugt ist die Komponente (B) eine Mischung aus
(B1) mindestens einer, von der Komponente (B2) verschiedenen, Polyisocyanatgruppenhaltigen Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper
(B2) mindestens einer Polyisocyanatgruppenhaltigen Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper.

Die als Grundkörper für die erfindungsgemäß eingesetzten Polyisocyanatgruppenhaltigen Verbindungen (B2) dienenden acyclischen aliphatischen Polyisocyanate sind bevorzugt an sich bekannte substituierte oder unsubstituierte aliphatische Polyisocyanate. Beispiele für bevorzugte Polyisocyanate (B2) sind Tetramethylen-1,4-diisocyanat, Hexamethylen-1,6-diisocyanat, 2,2,4-Trimethylhexane-1,6-diisocyanat, Ethylendiisocyanat, 1,12-Dodecandiisocyanat und Mischungen der vorgenannten Polyisocyanate.

Weiterhin bevorzugte Polyisocyanatgrundkörper für die Komponente (B2) sind die durch Trimerisierung, Dimerisierung, Urethan-, Biuret-, Uretdion- und/oder Allophanatbildung von einem solchen acyclischen aliphatischen Polyisocyanat abgeleiteten Polyisocyanate, insbesondere das Biuret-Dimer und/oder das AIlophanat-Dimer und/oder das Isocyanurat-Trimer. In einer weiteren Ausführungsform der Erfindung sind die Polyisocyanatgrundkörper für die Komponente (B2) Polyisocyanat-Präpolymerisate mit Urethan-Struktureinheiten, welche durch Umsetzung von Polyolen mit einem stöchiometrischen Überschuss an vorgenannten acyclischen aliphatischen Polyisocyanaten erhalten werden. Solche Polyisocyanat-Präpolymere sind beispielsweise in US-A-4, 598, 131 beschrieben.

Besonders bevorzugte Polyisocyanatgrundkörper für die Komponente (B2) sind Hexamethylendiisocyanat und/oder die durch Trimerisierung, Dimerisierung, Urethan-, Biuret-, und/ oder Allophanatbildung von ihm abgeleiteten Polyisocyanate.

Die als Komponente (B2) eingesetzten acyclischen aliphatischen Polyisocyanate bzw. deren durch Trimerisierung, Dimerisierung, Urethan-, Bi uret-, Uretdion- und/oder Allophanatbildung abgeleiteten Polyisocyanate können zusätzlich noch mindestens eine Struktureinheit (I) der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

enthalten, wobei
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

Bevorzugt eingesetzt werden als Komponente (B2) acyclische aliphatische Polyisocyanate mit freien oder blockierten Isocyanatgruppen bzw. deren durch Trimerisierung, Dimerisierung, Urethan-, Biuret-, und/oder Allophanatbildung abgeleiteten Polyisocyanate mit freien oder blockierten Isocyanatgruppen, die mindestens eine Struktureinheit (I) der Formel (I) und mindestens eine Struktureinheit der Formel (II) aufweisen.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die " alpha" - Silane genannt, die bei der Firma Wacker erhältlich sind, und bei denen eine Methylengruppe anstelle der bei "gamma" -Silane vorhandenen Propylengruppe zwischen Si-Atom und funktioneller Gruppe ist.

Die erfindungsgemäß bevorzugt eingesetzten, mit den Struktureinheiten (I) und/oder (II) funktionalisierten Komponenten (B2) werden insbesondere durch Umsetzung von acyclischen aliphatischen Polyisocyanaten bzw. deren durch Trimerisierung, Dimerisierung, Urethan-, Biuret-, Uretdion- und/oder Allophanatbildung abgeleiteten Polyisocyanaten mit mindestens einer Verbindung der Formel (la)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"y(OR')_{3-y})ₘ (IIa),

erhalten, wobei die Substituenten die oben genannte Bedeutung haben.

Die erfindungsgemäß besonders bevorzugt eingesetzten, mit den Struktureinheiten (I) und (II) funktionalisierten Komponenten (B2) werden besonders bevorzugt durch Umsetzung von
acyclischen aliphatischen Polyisocyanaten bzw. deren durch Trimerisierung, Dimerisierung, Urethan-, Biuret-, Uretdion und/oder Allophanatbildung abgeleiteten Polyisocyanaten
mit mindestens einer Verbindung der Formel (la) und mit mindestens einer Verbindung der Formel (IIa)
erhalten, wobei die Substituenten die oben genannte Bedeutung haben.

Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (la) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Bevorzugt sind in der Komponente (B2) zwischen 10 und 90 mol-%, bevorzugt zwischen 20 und 80 mol-%, besonders bevorzugt mehr als 30 und weniger als 70 mol-% und ganz besonders bevorzugt zwischen 31 und 50 mol-%, der ursprünglich vorhandenen Isocyanatgruppen zu Struktureinheiten (I) und (II) umgesetzt worden.

### Die cycloaliphatische Polyisocyanat-Komponente (B1)

Es ist bevorzugt, dass die Beschichtungsmittelzusammensetzungen als Komponente (B) zusätzlich mindestens eine Polyisocyanatgruppenhaltige Verbindung (B1) mit freien oder blockierten Isocyanatgruppen und mit einem cycloaliphatischen Polyisocyanatgrundkörper und/oder mit einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper enthalten.

Die als Grundkörper für die erfindungsgemäß eingesetzten Polyisocyanatgruppenhaltigen Verbindungen (B1) eingesetzten cycloaliphatischen Polyisocyanate sind bevorzugt an sich bekannte substituierte oder unsubstituierte cycloaliphatische Polyisocyanate. Beispiele für bevorzugte Polyisocyanate (B1) sind Isophorondiisocyanat, Cyclobutan-1,3-diisocyanat, Cyclohexan-1,3-diisocyanat, Cyclohexan-1,4-düsocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4' -diisocyanat, 4,4' -Methylendicyclohexyldiisocyanat (z.B. Desmodur ® W der Fa. Bayer AG) und Mischungen der vorgenannten Polyisocyanate.

Weiterhin bevorzugte Polyisocyanatgrundkörper für die Komponente (B1) sind die durch Trimerisierung, Dimerisierung, Urethan-, Biuret-, Uretdion- und/oder Allophanatbildung von einem solchen cycloaliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform der Erfindung sind die Polyisocyanatgrundkörper für die Komponente (B1) Polyisocyanat-Präpolymerisate mit Urethan-Struktureinheiten, welche durch Umsetzung von Polyolen mit einem stöchiometrischen Überschuss an vorgenannten cycloaliphatischen Polyisocyanaten erhalten werden. Solche Polyisocyanat-Präpolymere sind beispielsweise in US-A-4, 598, 131 beschrieben.

Besonders bevorzugte cycloaliphatische Polyisocyanate (B1) sind Isophorondiisocyanat und 4,4' -Methylendicyclohexyldiisocyanat und/oder deren Biuret-Dimere und/oder deren Allophanat-Dimere und/oder deren Isocyanurat-Trimere.

Die als Komponente (B1) eingesetzten cycloaliphatischen Polyisocyanate bzw. deren durch Trimerisierung, Dimerisierung, Urethan-, Biuret- Uretdion- und/oder Allophanatbildung abgeleiteten Polyisocyanate können zusätzlich noch mindestens eine Struktureinheit (I) der Formel (I) und/oder mindestens eine Struktureinheit der Formel (II) enthalten.

Die mit den Struktureinheiten (I) und/oder (II) funktionalisierten Komponenten (B1) werden bevorzugt durch Umsetzung von cycloaliphatischen Polyisocyanaten bzw. deren durch Trimerisierung, Dimerisierung, Urethan-, Biuret-, Uretdion- und/oder Allophanatbildung abgeleiteten Polyisocyanate mit mindestens einer Verbindung der Formel (la)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"_{y}(OR')_{3-y})ₘ (IIa),

erhalten, wobei die Substituenten die oben genannte Bedeutung haben.

Bevorzugt sind in der Komponente (B1) 0 bis 34 mol-%, insbesondere weniger als 5,0 mol-%, bevorzugt weniger als 2,5 mol-%, und besonders bevorzugt keine der ursprünglich vorhandenen Isocyanatgruppen zu Struktureinheiten (I) und/oder zu Struktureinheiten (II) umgesetzt worden.

Der Gesamtgehalt an Struktureinheiten (I) in der Komponente (B) liegt bevorzugt zwischen 5 und 70 mol-%, besonders bevorzugt zwischen 10 und 50 mol-%, ganz besonders bevorzugt zwischen 10 und 40 mol-% jeweils bezogen auf die Gesamtheit der Struktureinheiten (I) plus (II), und der Gesamtgehalt an Struktureinheiten (II) in der Komponente (B) liegt bevorzugt zwischen 95 und 30 mol-%, besonders bevorzugt zwischen 90 und 50 mol-% und ganz besonders bevorzugt zwischen 90 und 60 mol-%, jeweils bezogen auf die Gesamtheit der Struktureinheiten (I) plus (II).

Falls also die Komponente (B1) nur Struktureinheiten (I), aber keine Struktureinheiten (II) enthält, dann enthält die Komponente (B2) zwingend Struktureinheiten (II) sowie ggf. zusätzlich noch Struktureinheiten (I). Falls die Komponente (B1) nur Struktureinheiten (II), aber keine Struktureinheiten (I) enthält, dann enthält die Komponente (B2) zwingend Struktureinheiten (I) sowie ggf. zusätzlich noch Struktureinheiten (II).

Falls die Komponente (B2) nur Struktureinheiten (I), aber keine Struktureinheiten (II) enthält, dann enthält die Komponente (B1) zwingend Struktureinheiten (II) sowie ggf. zusätzlich noch Struktureinheiten (I). Falls die Komponente (B2) nur Struktureinheiten (II), aber keine Struktureinheiten (I) enthält, dann enthält die Komponente (B1) zwingend Struktureinheiten (I) sowie ggf. zusätzlich noch Struktureinheiten (II).

Es ist erfindungswesentlich, dass in der Polyisocyanat-Komponente (B) mehr als 30 mol-% und weniger als 70 mol-% und bevorzugt zwischen 31 und 50 mol-%, der ursprünglich in der Komponente (B) vorhandenen Isocyanatgruppen zu Struktureinheiten (I) und (II) umgesetzt worden sind.

Es ist ferner erfindungswesentlich, dass in der Polyisocyanat-Komponente (B) mehr als 25 mol-% und weniger als 36 mol-%, bevorzugt zwischen 26 und 35 mol-%, der ursprünglich vorhandenen Isocyanatgruppen zu Struktureinheiten (II) umgesetzt worden sind.

Die Komponente (B1) wird bevorzugt in einer solchen Menge eingesetzt, dass der Bindemittelanteil der Komponente (B1) zwischen 0 und 45 Gew.-%, bevorzugt zwischen 0 und 40 Gew.-% und besonders bevorzugt zwischen 5 und 35 Gew.-% beträgt, jeweils bezogen auf die Summe aus dem Bindemittelanteil der Komponente (B1) plus dem Bindemittelanteil der Komponente (B2).

Besonders bevorzugte Beschichtungsmittelzusammensetzungen werden erhalten, wenn in der Komponente (B)
der Gesamtgehalt an Struktureinheiten (I) zwischen 10 und 40 mol-% und der Gesamtgehalt an Struktureinheiten (II) zwischen 90 und 60 mol-%, jeweils bezogen auf die Gesamtheit der Struktureinheiten (I) plus (II), liegt und
zwischen 31 und 50 mol-%, der ursprünglich in (B) vorhandenen Isocyanatgruppen zu Struktureinheiten (I) und(II) umgesetzt worden sind und
in der Komponente (B) zwischen 26 und 35 mol-% der ursprünglich vorhandenen Isocyanatgruppen zu Struktureinheiten (II) umgesetzt worden sind.

In einer weiteren Ausführungsform der Erfindung weist die Polyhydroxylgruppen-haltige Verbindung (A) neben den Hydroxylgruppen Struktureinheiten der Formel (I) und/oder der Formel (II) auf.

Struktureinheiten der Formel (I) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (la) eingeführt, wobei die Substituenten die obengenannte Bedeutung haben. Struktureinheiten der Formel (II) können analog in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa) eingeführt werden, wobei die Substituenten die obengenannte Bedeutung haben. Zur Umsetzung des Polyols mit der Verbindung (la) und/oder (IIa) weist dieses entsprechend weitere funktionelle Gruppen auf, welche mit der sekundären Aminogruppe der Verbindung (la) bzw. (IIa) reagieren, wie insbesondere Säure- oder Epoxygruppen.
Monomerbausteine, die die Strukturelemente (I) und/oder (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (la) und/oder (IIa).

Geeignete Polyhydroxylgruppen-haltige Verbindungen (A) mit Struktureinheiten der Formel (I) und/oder der Formel (II) sind auch in der WO 08/74489, Seite 21, Zeile 21, bis Seite 23, Zeile 18 beschrieben.

### Katalysator (D)

Die erfindungsgemäßen Beschichtungsmittelzusammensetzungen enthalten bevorzugt mindestens einen Katalysator (D) für die Vernetzung der Silangruppen. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und - di-ester, eingesetzt.

Ganz besonders bevorzugt werden als Katalysator (D) die entsprechenden a-minblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma

King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäßen Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt.

### Die Kombination der Komponenten (A), (B1), (B2), ggf. (C) und (D) sowie weitere Komponenten der Beschichtungsmittelzusammensetzungen

Handelt es sich um einkomponentige Beschichtungsmittelzusammensetzungen, so werden Polyisocyanatgruppen-haltige Verbindungen (B) bzw. (B1) bzw. (B2) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) bzw. (B1) bzw. (B2) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppenhaltigen Verbindungen (B2) und ggf. (B1) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxylgruppen-haltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Bevorzugt werden erfindungsgemäß Beschichtungsmittelzusammensetzungen eingesetzt, die von 20 bis 80 Gew.-%, bevorzugt von 30 bis 69,9 Gew.-%, jeweils bezogen auf den Bindemittelanteil der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Bevorzugt werden erfindungsgemäß Beschichtungsmittelzusammensetzungen eingesetzt, die von 80 bis 20 Gew.-%, bevorzugt von 69,9 bis 30 Gew.-%, jeweils bezogen auf den Bindemittelanteil der Beschichtungsmittelzusammensetzung, der Polyisocyanatkomponente (B) bzw. der Mischung aus mindestens einer Polyisocyanat-Komponente (B2) plus ggf. mindestens einer PolyisocyanatKomponente (B1) enthalten.

Bevorzugt enthalten die Beschichtungsmittelzusammensetzungen die Verbindungen (C) in einem Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung.

Die Gewichtsanteile des Polyols (A) und ggf. (C) und der Polyisocyanatgruppenhaltigen Komponente (B) werden vorzugsweise solchermaßen gewählt, dass das molare Äquivalentverhältnis der Hydroxylgruppen der Polyhydroxylgruppenhaltigen Verbindung (A) plus ggf. (C) zu den Isocyanatgruppen der Komponente (B) zwischen 1:0,5 und 1:1,5, bevorzugt zwischen 1:0,8 und 1:1,2 besonders bevorzugt zwischen 1:0,9 und 1:1,1, liegt.

Die Polyhydroxylgruppen-haltige Komponente (A), die Polyhydroxylgruppen-haltige Komponente (C) und/oder die Polyisocyanat-Komponente (B) bzw. (B1) und/oder (B2) können in einem geeigneten Lösemittel vorliegen.

Als Lösemittel (L) für die erfindungsgemäßen Beschichtungsmittel sind insbesondere solche geeignet, die im Beschichtungsmittel chemisch inert gegenüber den Verbindungen (A), (B) bzw.(B1) bzw. (B2) und ggf. (C) sind und die auch bei der Härtung des Beschichtungsmittels nicht mit (A), ggf. (C), (B), (B1) und (B2) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Festkörpergehalt der Beschichtungsmittelzusammensetzung mindestens 50 Gew.-%, besonders bevorzugt mindestens 60 Gew.-% beträgt.

Neben den Verbindungen (A), (B) und ggf. (C) können noch weitere Bindemittel (E) eingesetzt werden, welche vorzugsweise mit den Hydroxylgruppen des Poly(meth)acrylates (A) und/oder mit den freien Isocyanatgruppen der Verbindung (B) und/oder mit den Alkoxysilylgruppen der Verbindungen (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf den Bindemittelanteil der erfindungsgemäßen Beschichtungsmittelzusammensetzung, eingesetzt.

Darüber hinaus kann die erfindungsgemäße Bindemittelmischung bzw. die erfindungsgemäße Beschichtungsmittelzusammensetzung mindestens ein übliches und bekanntes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (C) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel.

Besonders bevorzugt sind Beschichtungsmittelzusammensetzungen, die 30 bis 69,9 Gew.-%, bezogen auf den Bindemittelanteil der Beschichtungsmittelzusammensetzung, mindestens eines Polyhydroxylgruppen-haltigen Polyacrylates (A) und/oder mindestens eines Polyhydroxylgruppen-haltigen Polymethacrylates (A),
69,9 bis 30 Gew.-%, bezogen auf den Bindemittelanteil der Beschichtungsmittelzusammensetzung, der Polyisocyanatgruppen-haltigen Komponente (B),
0 bis 10 Gew.-%, bezogen auf den Bindemittelanteil der Beschichtungsmittelzusammensetzung, der hydroxylgruppenhaltigen Komponente (C)
0,1 bis 10 Gew.-%, bezogen auf den Bindemittelanteil der erfindungsgemäßen Beschichtungsmittelzusammensetzung, mindestens eines Katalysators (D),
0 bis 15 Gew.-%, bezogen auf den Bindemittelanteil der Beschichtungsmittelzusammensetzung, eines oder mehrerer Aminoplastharze und/oder eines oder mehrerer Tris(Alkoxycarbonylamino)Triazine (E) und
0 bis 20 Gew.-%, bezogen auf den Bindemittelanteil der Beschichtungsmittelzusammensetzung, mindestens eines üblichen und bekannten Lackadditivs (F) enthalten.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B) bzw. (B1) bzw. (B2) bzw. (C) des Beschichtungsmittels wird analog dadurch bestimmt, dass eine kleine Probe (P) der jeweiligen Komponente (A) bzw. (B) bzw. (B1) bzw. (B2) bzw. (C) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-BindemittelVerhältnis zwischen 0,05 : 1 und 1,5 : 1 liegt, jeweils bezogen auf den Bindemittelanteil der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

Herstellbeispiel für das im Vergleichsbeispiel V1 eingesetzte Härtersystem VB2-1 auf Basis des Isocyanurates von Hexamethylendiisocyanat (Gesamtsilanisierungsgrad, bezogen auf NCO molar: 34 mol-%, molares Verhältnis der Struktureinheiten (I) zu den Struktureinheiten (II) = 50:50, Menge Struktureinheiten (II), jeweils bezogen auf die ursprünglich (d.h vor Umsetzung mit (la) und (IIa)) in (B1) plus (B2) vorhandenen Isocyanatgruppen: 17 mol-%)
In einem Reaktionsgefäß werden 33,5 Gewichtsteile trimerisiertes Hexamethyl-1,6-diisocyanat (Desmodur® N3300, Firma Bayer, Leverkusen) und 28 Gewichtsteile Butylacetat vorgelegt. Unter Rückflusskühlung, Stickstoffüberschleierung und Rühren wird eine Mischung aus 7,0 Gewichtsteilen N-[3-(trimethoxysilyl)-propyl]-butylamin (Dynasylan® 1189, Firma EVONIK, Rheinfelden) und 10,0 Gewichtsteilen Bis - [3 trimethoxysilyl- propyl] amin (Dynasylan® 1124, EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 6,1 Gew.-% erreicht hat. Das so erhaltene Gemisch weist einen theoretischen Festkörpergehalt von 64 Gew.-% auf.

**Herstellbeispiel für das im erfindungsgemäßen Beispiel B1 eingesetzte Härtersystem (B1-1) plus (B2-1) (molares Verhältnis der Struktureinheiten (I) zu den Struktureinheiten (II) in der Verbindung (B2-1) = 10:90, einem Gesamtsilanisierungsgrad, bezogen auf die ursprünglich in der Verbindung (B1-1) plus der Verbindung (B2-1) vorhandenen Isocyanatgruppen, von 31 mol-%, Menge Struktureinheiten (II), jeweils bezogen auf die ursprünglich (d.h vor Umsetzung mit (la) und (IIa)) in (B1-1) plus (B2-1) vorhandenen Isocyanatgruppen: 27,9 mol-% und einem Bindemittelanteil der Verbindung (B1-1) von 5 Gew.%, bezogen auf die Summe aus dem Bindemittelanteil der Verbindung (B1-1) und dem Bindemittelanteil der Verbindung (B2-1))**
In einem Reaktionsgefäß werden 24 Gewichtsteile trimerisiertes Hexamethyl-1,6-diisocyanat (Desmodur® 3300, Firma Bayer, Leverkusen) und 22 Gewichtsteile Butylacetat vorgelegt. Unter Rückflusskühlung, Stickstoffüberschleierung und Rühren wird eine Mischung aus 1,0 Gewichtsteilen N-[3-(trimethoxysilyl)-propyl]-butylamin (Dynasylan® 1189, Firma EVONIK, Rheinfelden) und 12,5 Gewichtsteile Bis - [3 trimethoxysilyl- propyl] amin (Dynasylan® 1124, EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 5,9 Gew.-% erreicht hat. Anschließend werden 2,0 Gewichtsteile trimerisiertes I-sophorondiisocyanat (Desmodur® Z4470, 70%ig in Solventnaphta) zugegeben. Das so erhaltene Gemisch weist einen NCO-Wert von 6,1 Gew.-% auf. Das so erhaltene Gemisch weist einen theoretischen Festkörpergehalt von 63 Gew.-% auf.

**Herstellbeispiel für das im erfindungsgemäßen Beispiel B2 eingesetzte Härtersystem (B2-2) (molares Verhältnis der Struktureinheiten (I) zu den Struktureinheiten (II) in der Verbindung (B2-2) = 10:90, einem Gesamtsilanisierungsgrad der Verbindung (B2-2) von 32 mol-%, Menge Struktureinheiten (II), jeweils bezogen auf die ursprünglich (d.h vor Umsetzung mit (la) und (IIa)) in (B1-2) plus (B2-2) vorhandenen Isocyanatgruppen: 28,8 mol-% und einem Bindemittelanteil der Verbindung (B1-2) von 0 Gew.%, bezogen auf die Summe aus dem Bindemittelanteil der Verbindung (B1-2) und dem Bindemittelanteil der Verbindung (B2-2))**
In einem Reaktionsgefäß werden 25 Gewichtsteile trimerisiertes Hexamethyl-1,6-diisocyanat (Desmodur® N3300, Firma Bayer, Leverkusen) und 28 Gewichtsteile Butylacetat vorgelegt. Unter Rückflusskühlung, Stickstoffüberschleierung und Rühren wird eine Mischung aus 1,0 Gewichtsteilen N-[3-(trimethoxysilyl)-propyl]-butylamin (Dynasylan® 1189, Firma EVONIK, Rheinfel-den) und 12,5 Gewichtsteilen Bis - [3 trimethoxysilyl- propyl] amin (Dynasylan® 1124, EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 6,1 Gew.-% erreicht hat. Das so erhaltene Gemisch weist einen theoretischen Festkörpergehalt von 62 Gew.-% auf.
In der nachfolgenden Tabelle 1 sind die Kennzahlen der Härtermischungen der Beispiele und Vergleichsbeispiele zusammengefasst:

**Erläuterungen zu Tabelle 1**

| | VB1 | B1-1 + B2-1 | B1-2 + B2-2 |
|---|---|---|---|
| Silanisierungs- grad¹⁾ (mol-%) | 34 | 31 | 32 |
| Menge Struktureinheiten (II)²⁾ (mol-%) | 17 | 27,9 | 28,8 |
| Menge Struktureinheiten (I)³⁾ (mol-%) | 17 | 3,1 | 3,2 |
| Bindemittelanteil der Verbindung (B1)⁴⁾ (Gew.%) | - | 5 | - |

| | | | |
|---|---|---|---|
| ¹⁾ Silanisierungsgrad in mol-%, jeweils bezogen auf die ursprünglich in (B1) plus (B2) vorhandenen Isocyanatgruppen ²⁾ Menge Struktureinheiten (II), jeweils bezogen auf die ursprünglich in (B1) plus (B2) vorhandenen Isocyanatgruppen ³⁾ Menge Struktureinheiten (I), jeweils bezogen auf die ursprünglich in (B1) plus (B2) vorhandenen Isocyanatgruppen ⁴⁾ Bindemittelanteil der Verbindung (B1) in Gew.%, jeweils bezogen auf die Summe aus dem Bindemittelanteil der Verbindung (B1) und dem Bindemittelanteil der Verbindung (B2) | | | |

### Herstellbeispiel Bindemittel (A1) für Stammlack:

In einem, mittels Ölumlaufthermostat beheizbaren, doppelwandigen 4-I Edelstahlkessel, ausgestattet mit Thermometer, Ankerrührer, 2 Tropftrichtern und Rückflusskühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 2 angegebenen Feststoffgehalt eingestellt.

**Tabelle 2: Zusammensetzung des Polymethacrylates (A1) in Gew.-Teilen und Kennzahlen des Polymethacrylates (A1) (Säurezahl experimentell bestimmt, OHZ theoretisch berechnet, Tg theoretisch berechnet)**

| Komponente | Gew.-TI. |
|---|---|
| Styrol | 8,0 |
| n-Butylmethacrylat | 8,0 |
| Acrylsäure | 0,6 |
| 4-Hyd roxybutylacrylat | 12,0 |
| 2-Hyd roxyethylacrylat | 12,0 |
| n-Butylacrylat | 19,0 |
| Festkörper 1 h 150°C | 65% |
| Säurezahl (gemessen) [mg KOH/g] | 8-12 |
| OH-Zahl berechnet [mg KOH/g] | 175 |
| Tg (FOX) [°C] | -27 |

### Formulierung der erfindungsgemäßen Beschichtungsmittel B1 bis B2 und des Beschichtungsmittels VB1 sowie der entsprechenden Beschichtungen der Beispiele 1 bis 2 und des Vergleichsbeispiels V1

Zur Herstellung des Stammlacks S1 werden die in Tabelle 3 angegebenen Bestandteile in angegebener Reihenfolge (von oben beginnend) in einem geeigneten Gefäß in dieser Reihenfolge eingewogen und innig miteinander verrührt.

**Tabelle 3: Zusammensetzung des Stammlackes (S1) in Gew.-Teilen**

| Position | Komponente | Gew.-Teile |
|---|---|---|
| 1 | Polyacrylat (A1) | 75 |
| 2 | TINUVIN® 384 ¹⁾ | 1,5 |
| 3 | TINUVIN® 292 ²⁾ | 1,5 |
| 4 | BYK® 325 ³⁾ | 0,2 |
| 5 | Butylacetat | 23 |
| 6 | Nacure® 4167 ⁴⁾ | 2,3 |

| | | |
|---|---|---|
| Erläuterungen zu Tabelle 3: ¹⁾ Tinuvin® 384 = handelsübliches Lichtschutzmittel auf Basis eines Benztriazols der Firma BASF S.E. ²⁾ Tinuvin® 292 = handelsübliches Lichtschutzmittel auf Basis eines sterisch gehinderten Amins der Firma BASF S.E. ³⁾ Byk 325 = handelsübliches, polyethermodifiziertes Polymethylalkylsiloxan der Firma Byk Chemie ⁴⁾ Nacure® 4167 = handelsüblicher Katalysator auf Basis von aminblockiertem Phosphorsäureteilester der Firma King Industries, nicht flüchtiger Anteil 25% | | |

**Tabelle 4: Zusammensetzung der Beschichtungsmittel der Beispiele B1 bis B2 und des Vergleichsbeispiels V1**

| | Vergleichsbeispiel V1 | Beispiel B1 | Beispiel B2 |
|---|---|---|---|
| Stammlack (S1) | 100 | 100 | 100 |
| Härter VB1 | 100 | - | - |
| Härtermischung B1-1 + B2-1 | - | 100 | - |
| Härtermischung B1-2 + B2-2 | - | - | 100 |

Zur Herstellung der Beschichtungsmittel der Beispiele B1 bis B2 und des Vergleichsbeispiels V1 werden die in Tabelle 4 angegebenen Bestandteile in angegebener Reihenfolge (von oben beginnend) in einem geeigneten Gefäß in dieser Reihenfolge eingewogen und innig miteinander verrührt. Die so erhaltenen Beschichtungsmittel der Beispiele B1 bis B2 und des Vergleichsbeispiels V1 werden auf Bonderblechen, lackiert mit schwarzem Wasserbasislack, mit einer Fließbecherpistole appliziert und 20 Minuten bei 140°C eingebrannt.

Nach 2h Lagerung bei Umgebungstemperatur wird auf dem gehärteten Klarlackblech eine Schleifstelle gesetzt (mit exzentrischem Druckluft-Schwingschleifer von 3M, 10000 U/min, Schleifblüte: 3M Trizact 3000er Körnung). Diese Schleifstelle wird anschließend mit Polierpaste aufpoliert (rotativer Polierprozess, Lammfellscheibe, Polierpaste Menzerna Nanopoliercreme PO 106 FA). Anschließend werden Haze und Glanz mit Hilfe des Glanzmessgerätes micro-haze plus, Firma Byk bestimmt. Die Prüfergebnisse sind in Tabelle 5 aufgeführt.

Die Prüfung der Kratzfestigkeit der resultierenden Beschichtungen erfolgte durch den Waschstraßensimulationstest mit einer Laborwaschanlage der Firma AMTEC-Kistler nach DIN20566. Die Beanspruchung wurde durch Messung des Restglanzes der Probe mit Hilfe des Glanzmessgerätes micro-haze plus, Firma Byk nach 10 bzw. 50 Cyclen in der AMTEC-Kistler-Anlage und nachfolgendem Abwischen mit einem mit Waschbenzin getränktem Wattebausch bestimmt.

**Tabelle 5: Prüfergebnisse der Beschichtungen der Beispiele B1 bis B2 und des Vergleichsbeispiels V1**

| | Vergleichsbeispiel V1 | Beispiel B1 | Beispiel B2 |
|---|---|---|---|
| Glanz (20°) unbehandelt | 87 | 88 | 88 |
| Haze unbehandelt | 7 | 6 | 6 |
| Glanz (20°) nach 9s Polierzeit | 65 | 65 | 65 |
| Glanz (20°) nach 12s Polierzeit | 73 | 76 | 76 |
| Haze nach 9s Polierzeit | 103 | 100 | 105 |
| Haze nach 12s Polierzeit | 74 | 50 | 55 |
| Restglanz 20° in % nach 10 Cyclen | 90 | 86 | 85 |
| Restglanz 20° in % nach 50 Cyclen | 70 | 66 | 67 |

### Diskussion der Prüfergebnisse:

Sowohl die entsprechenden Haze-Werte als auch die entsprechenden Glanz-werte sind relevant, da hohe gemessene Glanzeinheiten zwar eine erforderliche, aber keine hinreichende Bedingung sind. Während hohe Glanzeinheiten einen guten Eindruck bei der Aufsicht auf eine polierte Fläche zeigen, können hohe Haze-Werte bei leicht schräger Sicht zu einem trüben/milchigen Eindruck führen. Ziel ist es, möglichst nahe und schnell an die unbelasteten Glanz-Werte und Haze-Werte zu kommen.

Man erkennt deutlich, dass durch die Verwendung der Härtermischungen (B1-1) plus (B2-1) und (B1-2) plus (B2-2) mit optimiertem Anteil an zu den Struktureinheiten (II) umgesetzten ursprünglichen NCO-Gruppen in der Komponente (B2) zu Beschichtungen führt, welche nach Polierbelastung und nach 12 s Polierzeit einen Haze-Wert von 50 bzw. 55 Einheiten aufweisen, während die entsprechende Beschichtung ohne optimierten Anteil an zu den Struktureinheiten (II) umgesetzten ursprünglichen NCO-Gruppen im Vergleichsbeispiel (V1) zu einem wesentlich höheren Haze-Wert von 74 Einheiten führt.

## Patentansprüche

1. Nichtwässrige Beschichtungsmittelzusammensetzung enthaltend
(A) mindestens eine Polyhydroxylgruppen-haltige Verbindung (A),
(B) mindestens eine Polyisocyanatgruppen-haltige Verbindung (B) mit freien oder blockierten Isocyanatgruppen
und
(D) mindestens einen Katalysator (D) für die Vernetzung von Silangruppen, wobei die Komponente (B) mindestens eine Struktureinheit der Formel (I)
-NR-(X-SiR"ₓ(OR')₃₋ₓ) (I),
und mindestens eine Struktureinheit der Formel (II)
-N(X-SiR"ₓ(OR')₃₋ₓ)ₙ(X'-SiR"_{y}(OR')_{3-y})ₘ (II),
mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X, X' = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
n = 0 bis 2, m = 0 bis 2, m+n = 2 sowie x, y = 0 bis 2 ist,
enthält, mit der Maßgabe, dass
(i) in der Komponente (B) mehr als 30 mol-% und weniger als 70 mol-% der ursprünglich vorhandenen Isocyanatgruppen zu Struktureinheiten (I) plus (II) umgesetzt worden sind,
(ii) in der Komponente (B) mehr als 25 und weniger als 36 mol-% der ursprünglich vorhandenen Isocyanatgruppen zu Struktureinheiten (II) umgesetzt worden sind
und
(iii) die Beschichtungsmittelzusammensetzung als Komponente (B) mindestens eine Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper enthält,
ausgenommen eine Beschichtungsmittelzusammensetzung gemäß Beispiel B4 der WO 2011/131463 A1.

2. Beschichtungsmittelzusammensetzung nach Anspruch 1, **dadurch gekennzeichnet, dass** zwischen 31 und 50 mol-%, der ursprünglich in der Komponente (B) vorhandenen Isocyanatgruppen zu Struktureinheiten (I) und(II) umgesetzt worden sind.

3. Beschichtungsmittelzusammensetzung nach Anspruch 1 oder 2, **dadurch gekennzeichnet, dass** in der Komponente (B) zwischen 26 und 35 mol-% der ursprünglich vorhandenen Isocyanatgruppen zu Struktureinheiten (II) umgesetzt worden sind.

4. Beschichtungsmittelzusammensetzung nach einem der Ansprüche 1 bis 3, **dadurch gekennzeichnet, dass** der Gesamtgehalt an Struktureinheiten (I) in der Komponente (B) zwischen 5 und 70 mol-%, bevorzugt zwischen 10 und 50 mol-%, besonders bevorzugt zwischen 10 und 40 mol-% jeweils bezogen auf die Gesamtheit der Struktureinheiten (I) plus (II), und der Gesamtgehalt an Struktureinheiten (II) in der Komponente (B) zwischen 95 und 30 mol-%, bevorzugt zwischen 90 und 50 mol-% und besonders bevorzugt zwischen 90 und 60 mol-%, jeweils bezogen auf die Gesamtheit der Struktureinheiten (I) plus (II), liegt.

5. Beschichtungsmittelzusammensetzung nach einem der Ansprüche 1 bis 4, **dadurch gekennzeichnet, dass** die Komponente (B) eine Mischung ist aus
(B1) mindestens einer, von der Komponente (B2) verschiedenen, Polyisocyanatgruppenhaltigen Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper
und
(B2) mindestens einer Polyisocyanatgruppenhaltigen Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper.

6. Beschichtungsmittelzusammensetzung nach einem der Ansprüche 1 bis 5, **dadurch gekennzeichnet, dass** die Verbindung (B1) in einer solchen Menge eingesetzt wird, dass der Bindemittelanteil der Komponente (B1) zwischen 0 und 45 Gew.%, bevorzugt zwischen 0 und 40 Gew.%, besonders bevorzugt zwischen 5 und 35 Gew.-%, jeweils bezogen auf die Summe aus dem Bindemittelanteil der Komponente (B1) plus dem Bindemittelanteil der Komponente (B2), beträgt.

7. Beschichtungsmittelzusammensetzung nach einem der Ansprüche 1 bis 6, **dadurch gekennzeichnet, dass** der Polyisocyanatgrundkörper der Verbindung (B1) Isophorondiisocyanat und/oder 4,4'-Methylendicyclohexyldiisocyanat und/oder deren Isocyanurat- Trimeres und/oder deren Allophanat- Dimeres und/-oder deren Biuret- Dimeres ist und/oder der Polyisocyanatgrundkörper der Verbindung (B2) 1,6-Hexamethylendiisocyanat und/oder deren Isocyanurat-Trimeres und/oder deren Allophanat- Dimeres und/oder deren Biuret- Dimeres ist.

8. Beschichtungsmittelzusammensetzung nach einem der Ansprüche 1 bis 7, **dadurch gekennzeichnet, dass** die Komponente (B2) dadurch hergestellt worden ist, dass acyclische aliphatische Polyisocyanate und/oder ein durch Trimerisierung, Dimerisierung, Urethan-, Biuret-, Uretdion- und/oder Allophanatbildung von einem solchen acyclischen aliphatischen Polyisocyanat abgeleitetes Polyisocyanat mit mindestens einer Verbindung der Formel (Ia)
H-NR-(X-SiR"x(OR')3-x) (Ia)
und/oder mit mindestens einer Verbindung der Formel (IIa)
HN(X-SiR"x(OR')3-x)n(X'-SiR"y(OR')3-y)m (IIa),
umgesetzt worden sind, wobei die Substituenten die in Anspruch 1 genannte Bedeutung haben und/oder die Komponente (B1) dadurch hergestellt worden ist, dass cycloaliphatische Polyisocyanate und/oder durch Trimerisierung, Dimerisierung, Urethan-, Biuret-, Uretdion- oder Allophanatbildung von solchen cycloaliphatischen Polyisocyanaten abgeleitete Polyisocyanate mit mindestens einer Verbindung der Formel (Ia) und/oder mit mindestens einer Verbindung der Formel (IIa) umgesetzt worden sind, wobei die Substituenten die in Anspruch 1 genannte Bedeutung haben.

9. Beschichtungsmittelzusammensetzung nach einem der Ansprüche 1 bis 8, **dadurch gekennzeichnet, dass** in der Komponente (B) der Gesamtgehalt an Struktureinheiten (I) zwischen 10 und 40 mol-% und der Gesamtgehalt an Struktureinheiten (II) zwischen 90 und 60 mol-%, jeweils bezogen auf die Gesamtheit der Struktureinheiten (I) plus (II), liegt
und
zwischen 31 und 50 mol-%, der ursprünglich in der Komponente (B) vorhandenen Isocyanatgruppen zu Struktureinheiten (I) und (II) umgesetzt worden sind
und
in der Komponente (B) zwischen 26 und 35 mol-% der ursprünglich vorhandenen Isocyanatgruppen zu Struktureinheiten (II) umgesetzt worden sind.

10. Beschichtungsmittelzusammensetzung nach einem der Ansprüche 1 bis 9, **dadurch gekennzeichnet, dass** das Beschichtungsmittel von 20 bis 80 Gew.-%, bevorzugt von 30 bis 69,9 Gew.-%, jeweils bezogen auf den Bindemittelanteil des Beschichtungsmittel, mindestens eines hydroxylgruppenhaltigen Polyacrylates (A) und/oder mindestens eines hydroxylgruppenhaltigen Polymethacrylates (A) enthält.

11. Beschichtungsmittelzusammensetzung nach einem der Ansprüche 1 bis 10, **dadurch gekennzeichnet, dass** die Beschichtungsmittelzusammensetzung mindestens einen phosphor- und stickstoffhaltigen Katalysator (D) enthält.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 11 aufgebracht wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 11 bei Temperaturen von 20 bis 200°C während einer Zeit von einer Minute bis zu 10 Stunden gehärtet wird.

14. Verwendung der Beschichtungsmittelzusammensetzung nach einem der Ansprüche 1 bis 11 als Klarlack beziehungsweise Anwendung des Verfahrens nach Anspruch 12 oder 13 für die Automobilserienlackierung, die Lackierung von Automobil-Anbauteilen und/oder Nutzfahrzeugen und die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 11 hergestellt worden ist.

## Claims

1. Nonaqueous coating material composition comprising
(A) at least one polyhydroxyl-group-containing compound (A),
(B) at least one polyisocyanate-group-containing compound (B) having free or blocked isocyanate groups,
and
(D) at least one catalyst (D) for the crosslinking of silane groups,
where component (B) comprises at least one structural unit of the formula (I)
-NR-(X-SiR''x(OR')3-x) (I),
and at least one structural unit of the formula (II)
-N(X-SiR''x(OR')3-x)n(X'-SiR''y(OR')3-y)m (II),
where
R = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
R' = hydrogen, alkyl or cycloalkyl it being possible for the carbon chain to be interrupted by nonadjacent oxygen, sulfur or NRa groups, where Ra = alkyl, cycloalkyl, aryl or aralkyl,
X, X' = linear and/or branched alkylene or cycloalkylene radical having 1 to 20 carbon atoms,
R'' = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
n = 0 to 2, m = 0 to 2, m+n = 2, and x, y = 0 to 2,
with the provisos that
(i) in component (B) more than 30 mol% and less than 70 mol% of the originally present isocyanate groups have undergone reaction to form structural units (I) plus (II),
(ii) in component (B) more than 25 and less than 36 mol% of the originally present isocyanate groups have undergone reaction to form structural units (II),
and
(iii) the coating material composition comprises as component (B) at least one polyisocyanate-group-containing compound (B2) having free or blocked isocyanate groups and having an acyclic, aliphatic polyisocyanate parent structure and/or a polyisocyanate parent structure that is derived from one such acyclic aliphatic polyisocyanate by trimerization, dimerization, urethane formation, biuret formation, uretdione formation and/or allophanate formation, excluding a coating material composition as per Example B4 from WO 2011/131463 A1.

2. Coating material composition according to Claim 1, **characterized in that** between 31 and 50 mol% of the isocyanate groups originally present in component (B) have undergone reaction to form structural units (I) and (II).

3. Coating material composition according to Claim 1 or 2, **characterized in that** in component (B) between 26 and 35 mol% of the originally present isocyanate groups have undergone reaction to form structural units (II).

4. Coating material composition according to any of Claims 1 to 3, **characterized in that** the total amount of structural units (I) in component (B) is between 5 and 70 mol%, preferably between 10 and 50 mol%, more preferably between 10 and 40 mol%, based in each case on the entirety of the structural units (I) plus (II), and the total amount of structural units (II) in component (B) is between 95 and 30 mol%, preferably between 90 and 50 mol% and more preferably between 90 and 60 mol%, based in each case on the entirety of the structural units (I) plus (II).

5. Coating material composition according to any of Claims 1 to 4, **characterized in that** component (B) is a mixture of
(B1) at least one polyisocyanate-group-containing compound (B1), different from component (B2), having free or blocked isocyanate groups and having a cycloaliphatic polyisocyanate parent structure and/or a polyisocyanate parent structure that is derived from one such cycloaliphatic polyisocyanate by trimerization, dimerization, urethane formation, biuret formation, uretdione formation and/or allophanate formation,
and
(B2) at least one polyisocyanate-group-containing compound (B2) having free or blocked isocyanate groups and having an acyclic, aliphatic polyisocyanate parent structure and/or a polyisocyanate parent structure that is derived from one such acyclic aliphatic polyisocyanate by trimerization, dimerization, urethane formation, biuret formation, uretdione formation and/or allophanate formation.

6. Coating material composition according to any of Claims 1 to 5, **characterized in that** the compound (B1) is used in an amount such that the binder fraction of component (B1) is between 0% and 45% by weight, preferably between 0% and 40% by weight, more preferably between 5% and 35% by weight, based in each case on the sum of the binder fraction of component (B1) plus the binder fraction of component (B2).

7. Coating material composition according to any of Claims 1 to 6, **characterized in that** the polyisocyanate parent structure of the compound (B1) is isophorone diisocyanate and/or 4,4'-methylenedicyclohexyl diisocyanate and/or the isocyanurate trimer and/or allophanate dimer and/or biuret dimer thereof, and/or the polyisocyanate parent structure of the compound (B2) is 1,6-hexamethylene diisocyanate and/or the isocyanurate trimer and/or allophanate dimer and/or biuret dimer thereof.

8. Coating material composition according to any of Claims 1 to 7, **characterized in that** the component (B2) has been prepared by reacting acyclic aliphatic polyisocyanates and/or a polyisocyanate derived from one such acyclic aliphatic polyisocyanate by trimerization, dimerization, urethane formation, biuret formation, uretdione formation and/or allophanate formation with at least one compound of the formula (Ia)
H-NR-(X-SiR''x(OR')3-x) (Ia)
and/or with at least one compound of the formula (IIa)
HN(X-SiR''x(OR')3-x)n(X'-SiR''y(OR')3-y)m (IIa),
the substituents having the definition stated in claim 1 and/or component (B1) has been prepared by reacting cycloaliphatic polyisocyanates and/or polyisocyanates derived from cycloaliphatic polyisocyanates by trimerization, dimerization, urethane formation, biuret formation, uretdione formation or allophanate formation with at least one compound of formula (Ia) and/or with at least one compound of formula (IIa), the substituents having the definition stated in claim 1.

9. Coating material composition according to any of Claims 1 to 8, **characterized in that** in component (B) the total amount of structural units (I) is between 10 and 40 mol%
and
the total amount of structural units (II) is between 90 and 60 mol%, based in each case on the entirety of the structural units (I) plus (II),
and
between 31 and 50 mol% of the isocyanate groups originally present in component (B) have undergone reaction to form structural units (I) and (II)
and
in component (B) between 26% and 35 mol% of the originally present isocyanate groups have undergone reaction to form structural units (II).

10. Coating material composition according to any of Claims 1 to 9, **characterized in that** the coating material comprises from 20% to 80% by weight, preferably from 30% to 69.9% by weight, based in each case on the binder fraction of the coating material, of at least one hydroxyl-containing polyacrylate (A) and/or at least one hydroxyl-containing polymethacrylate (A).

11. Coating material composition according to any of Claims 1 to 10, **characterized in that** the coating material composition comprises at least one phosphorus- and nitrogen-containing catalyst (D).

12. Multistage coating process **characterized in that** atop an optionally precoated substrate a pigmented basecoat film and thereafter a film of the coating material composition according to any of Claims 1 to 11 is applied.

13. Multistage coating process according to Claim 12, **characterized in that**, after application of the pigmented basecoat film, the applied basecoat is initially dried at temperatures from room temperature to 80°C, and after the application of the coating material composition according to any of Claims 1 to 11, curing takes place at temperatures from 20 to 200°C for a time of one minute up to 10 hours.

14. Use of the coating material composition according to any of Claims 1 to 11 as clearcoat and application of the process according to Claim 12 or 13 for automotive OEM finishing, the finishing of parts for installation in or on motor vehicles and/or of utility vehicles, and automotive refinishing.

15. Multicoat effect and/or color paint system comprising at least one pigmented basecoat and at least one clearcoat disposed thereon, **characterized in that** the clearcoat has been produced from a coating material composition according to any of Claims 1 to 11.

## Revendications

1. Composition non aqueuse d'agent de revêtement, contenant :
(A) au moins un composé contenant des groupes polyhydroxyle (A),
(B) au moins un composé contenant des groupes poyisocyanate (B) contenant des groupes isocyanate libres ou bloqués,
et
(D) au moins un catalyseur (D) pour la réticulation de groupes silane,
le composant (B) contenant au moins une unité structurale de formule (I)
**-NR-(X-SiR"x(OR')3-x)** **(I),**
et au moins une unité structurale de formule (II)
**-N(X-SiR"x(OR')3-x)n(X'-SiR"y(OR')3-y)m** **(II)**
avec
R = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle,
X, X' = radical alkylène ou cycloalkylène linéaire et/ou ramifié de 1 à 20 atomes de carbone,
R'' = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
n = 0 à 2, m = 0 à 2, m+n = 2, et x, y = 0 à 2,
à condition que
(i) plus de 30 % en moles et moins de 70 % en moles des groupes isocyanate présents initialement dans le composant (B) aient été transformés en unités structurales (I) plus (II),
(ii) plus de 25 et moins de 36 % en moles des groupes isocyanate présents initialement dans le composant (B) aient été transformés en unités structurales (II),
et
(iii) la composition d'agent de revêtement contienne en tant que composant (B) au moins un composé contenant des groupes polyisocyanate (B2) contenant des groupes isocyanate libres ou bloqués et contenant un corps de base polyisocyanate acyclique aliphatique, et/ou un corps de base polyisocyanate dérivé d'un tel polyisocyanate acyclique aliphatique par trimérisation, dimérisation, formation d'uréthane, de biuret, d'uretdione et/ou d'allophanate,
à l'exception d'une composition d'agent de revêtement selon l'exemple B4 de WO 2011/131463 A1.

2. Composition d'agent de revêtement selon la revendication 1, **caractérisée en ce qu'**entre 31 et 50 % en moles des groupes isocyanate présents initialement dans le composant (B) ont été transformés en unités structurales (I) et (II).

3. Composition d'agent de revêtement selon la revendication 1 ou 2, **caractérisée en ce qu'**entre 26 et 35 % en moles des groupes isocyanate présents initialement dans le composant (B) ont été transformés en unités structurales (II).

4. Composition d'agent de revêtement selon l'une quelconque des revendications 1 à 3, **caractérisée en ce que** la teneur totale en unités structurales (I) dans le composant (B) est comprise entre 5 et 70 % en moles, de préférence entre 10 et 50 % en moles, de manière particulièrement préférée entre 10 et 40 % en moles, à chaque fois par rapport à la totalité des unités structurales (I) plus (II), et la teneur totale en unités structurales (II) dans le composant (B) est comprise entre 95 et 30 % en moles, de préférence entre 90 et 50 % en moles et de manière particulièrement préférée entre 90 et 60 % en moles, à chaque fois par rapport à la totalité des unités structurales (I) plus (II).

5. Composition d'agent de revêtement selon l'une quelconque des revendications 1 à 4, **caractérisée en ce que** le composant (B) est un mélange de
(B1) au moins un composé contenant des groupes polyisocyanate (B1), différent du composant (B2), contenant des groupes isocyanate libres ou bloqués, et contenant un corps de base polyisocyanate cycloaliphatique et/ou un corps de base polyisocyanate dérivé d'un tel polyisocyanate cycloaliphatique par trimérisation, dimérisation, formation d'uréthane, de biuret, d'uretdione et/ou d'allophanate,
et
(B2) au moins un composé contenant des groupes polyisocyanate (B2) contenant des groupes isocyanate libres ou bloqués, et contenant un corps de base polyisocyanate acyclique aliphatique et/ou un corps de base polyisocyanate dérivé d'un tel polyisocyanate acyclique aliphatique par trimérisation, dimérisation, formation d'uréthane, de biuret, d'uretdione et/ou d'allophanate.

6. Composition d'agent de revêtement selon l'une quelconque des revendications 1 à 5, **caractérisée en ce que** le composé (B1) est utilisé en une quantité telle que la proportion de liant du composant (B1) soit comprise entre 0 et 45 % en poids, de préférence entre 0 et 40 % en poids, de manière particulièrement préférée entre 5 et 35 % en poids, à chaque fois par rapport à la somme de la proportion de liant du composant (B1) plus la proportion de liant du composant (B2).

7. Composition d'agent de revêtement selon l'une quelconque des revendications 1 à 6, **caractérisée en ce que** le corps de base polyisocyanate du composé (B1) est le diisocyanate d'isophorone et/ou le diisocyanate de 4,4'-méthylène-dicyclohexyle et/ou son trimère isocyanurate et/ou son dimère allophanate et/ou son dimère biuret, et/ou le corps de base polyisocyanate du composé (B2) est le diisocyanate de 1,6-hexaméthylène et/ou son trimère isocyanurate et/ou son dimère allophanate et/ou son dimère biuret.

8. Composition d'agent de revêtement selon l'une quelconque des revendications 1 à 7, **caractérisée en ce que** le composant (B2) a été fabriqué par mise en réaction de polyisocyanates acycliques aliphatiques et/ou d'un polyisocyanate dérivé d'un tel polyisocyanate acyclique aliphatique par trimérisation, dimérisation, formation d'uréthane, de biuret, d'uretdione et/ou d'allophanate, avec au moins un composé de formule (Ia)
**H-NR-(X-SiR"x(OR')3-x)** **(Ia)**
et/ou avec au moins un composé de formule (IIa)
**HN(X-SiR"x(OR')3-x)n(X'-SiR"y(OR')3-y)m** **(IIa),**
les substituants ayant la signification indiquée dans la revendication 1, et/ou le composant (B1) a été fabriqué par mise en réaction de polyisocyanates cycloaliphatiques et/ou de polyisocyanates dérivé de tels polyisocyanates cycloaliphatiques par trimérisation, dimérisation, formation d'uréthane, de biuret, d'uretdione et/ou d'allophanate, avec au moins un composé de formule (Ia) et/ou avec au moins un composé de formule (IIa), les substituants ayant la signification indiquée dans la revendication 1.

9. Composition d'agent de revêtement selon l'une quelconque des revendications 1 à 8, **caractérisée en ce que**, dans le composant (B), la teneur totale en unités structurales (I) est comprise entre 10 et 40 % en moles, et la teneur totale en unités structurales (II) est comprise entre 90 et 60 % en moles, à chaque fois par rapport à la totalité des unités structurales (I) plus (II),
et
entre 31 et 50 % en moles des groupes isocyanate présents initialement dans le composant (B) ont été transformés en unités structurales (I) et (II),
et
entre 26 et 35 % en moles des groupes isocyanate présents initialement dans le composant (B) ont été transformés en unités structurales (II).

10. Composition d'agent de revêtement selon l'une quelconque des revendications 1 à 9, **caractérisée en ce que** l'agent de revêtement contient de 20 à 80 % en poids, de préférence de 30 à 69,9 % en poids, à chaque fois par rapport à la proportion de liant de l'agent de revêtement, d'au moins un polyacrylate contenant des groupes hydroxyle (A) et/ou d'au moins un polyméthacrylate contenant des groupes hydroxyle (A).

11. Composition d'agent de revêtement selon l'une quelconque des revendications 1 à 10, **caractérisée en ce que** la composition d'agent de revêtement contient au moins un catalyseur contenant du phosphore et de l'azote (D).

12. Procédé de revêtement à plusieurs étapes, **caractérisé en ce qu'**une couche de vernis de base pigmenté, puis une couche de la composition d'agent de revêtement selon l'une quelconque des revendications 1 à 11 sont appliquées sur un substrat éventuellement pré-revêtu.

13. Procédé de revêtement à plusieurs étapes selon la revendication 12, **caractérisé en ce qu'**après l'application de la couche de vernis de base pigmentée, le vernis de base appliqué est tout d'abord séché à des températures allant de la température ambiante à 80 °C et, après l'application de la composition d'agent de revêtement selon l'une quelconque des revendications 1 à 11, durci à des températures de 20 à 200 °C pendant une durée d'une minute à 10 heures.

14. Utilisation de la composition d'agent de revêtement selon l'une quelconque des revendications 1 à 11 en tant que vernis transparent ou utilisation du procédé selon la revendication 12 ou 13 pour le vernissage en série d'automobiles, le vernissage de pièces d'automobiles et/ou de véhicules utilitaires et pour le vernissage automobile de réparation.

15. Vernissage multicouche à effet et/ou colorant constitué d'au moins une couche de vernis de base pigmentée et d'au moins une couche de vernis transparent agencée sur celle-ci, **caractérisé en ce que** la couche de vernis transparent a été fabriquée à partir d'une composition d'agent de revêtement selon l'une quelconque des revendications 1 à 11.
